(19) Europäisches Patentamt
European Patent Office
Office européen des brevets

(11) Veröffentlichungsnummer : **0 145 003**
**B1**

(12) # EUROPÄISCHE PATENTSCHRIFT

(45) Veröffentlichungstag der Patentschrift : **07.03.90**

(51) Int. Cl.$^5$ : **C 09 B 69/04**, C 09 B 67/34, C 09 B 25/00

(21) Anmeldenummer : **84115040.2**

(22) Anmeldetag : **10.12.84**

(54) **Flüssige Farbstoffsalze.**

(30) Priorität : **13.12.83 DE 3344978**

(43) Veröffentlichungstag der Anmeldung : **19.06.85 Patentblatt 85/25**

(45) Bekanntmachung des Hinweises auf die Patenterteilung : **07.03.90 Patentblatt 90/10**

(84) Benannte Vertragsstaaten : **CH DE FR GB IT LI**

(56) Entgegenhaltungen :
**EP–A– 0 021 619**
**EP–A– 0 041 134**
**EP–A– 0 053 220**
**US–A– 2 095 077**
**US–A– 4 398 916**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bermes, Rudolf, Dr. Chemiker**
**Pilgerstrasse 29**
**D-6700 Ludwigshafen (DE)**

**EP 0 145 003 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft Verbindungen der Formel I

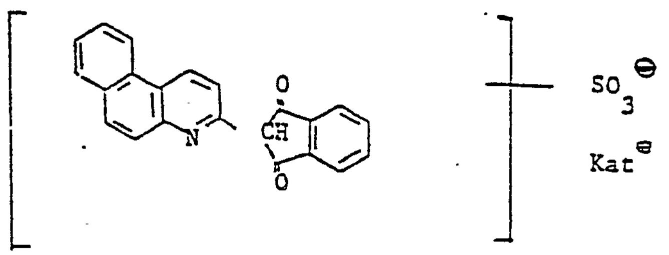

(I)

in der die aromatischen Ringe noch durch Chlor, Brom, Methyl, Methoxy oder Nitro substituiert sein können und in der $Kat^{\oplus}$ ein Rest der Formel

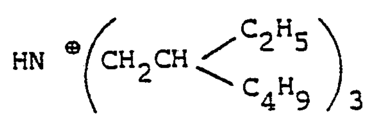

oder

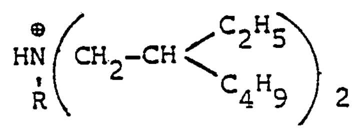

ist, wobei R $C_1$- bis $C_4$-Alkyl bedeutet.

Bevorzugt ist das nicht weiter substituierte Anion gemäß der Formel I.

Aus der EP-A-41 134 ist bereits das Ditridecylaminsalz von 5,6-Benzochinophthalonsulfonsäure bekannt. Es hat sich jedoch gezeigt, daß dieses Salz unzureichende anwendungstechnische Eigenschaften besitzt.

Weiterhin beschreibt die US-A-2 095 077 Di- und Triamylaminsalze von Farbstoffen, die eine Sulfonsäuregruppe aufweisen.

Schließlich geht aus der EP-A-21 619 hervor, daß bei der Herstellung von konzentrierten, wäßrigen Lösungen von Sulfonsäuregruppen enthaltenden Farbstoffen tertiäre Amine zur Trennung von organischer und wäßriger Phase besonders gut geeignet sind.

Zur Herstellung der neuen Verbindungen der Formel I kann man die den Verbindungen der Formel I zugrundeliegenden Sulfonsäuren mit den den $Kat^{\oplus}$ zugrundeliegenden Aminen zum Salz umsetzen.

Eine bevorzugte Methode zur Herstellung der Salze besteht in der Extraktion der Sulfonsäuren aus dem bei der Sulfierung erhaltenen Gemisch mit den Aminen entsprechend dem in dem EP 53 220 beschriebenen Verfahren.

Einzelheiten der Herstellung können den Beispielen entnommen werden, in denen sich Angaben über Teile und Prozente, sofern nicht anders vermerkt, auf das Gewicht beziehen.

Die Verbindungen der Formel I sind in Abhängigkeit von der Temperatur zäh- bis dünnflüssig und eignen sich hervorragend zur Herstellung von elektrolytarmen Pulver- und Flüssigeinstellungen solcher Verbindungen der Formel I, bei denen $Kat^{\oplus}$ ein Alkali-, Ammonium- oder wasserlöslichmachende substituiertes Ammoniumkation ist.

Bevorzugte wasserlöslich machende Kationen sind z. B. $Li^{\oplus}$, $Na^{\oplus}$, $K^{\oplus}$, $NH_4^{\oplus}$, $H_3\overset{\oplus}{N}C_2H_4OH$, $H_2\overset{\oplus}{N}(C_2H_4OH)_2$, $H\overset{\oplus}{N}(C_2H_4OH)_3$, $CH_3\overset{\oplus}{N}H_2C_2H_4OH$, $(CH_3)_2\overset{\oplus}{N}HC_2H_4OH$, $(C_2H_5)_2\overset{\oplus}{N}HC_2H_4OH$, $(CH_3)_2\overset{\oplus}{N}HC_3H_6OH$, $H_3\overset{\oplus}{N}C_4H_8OH$, $CH_3\overset{\oplus}{N}H_3$ oder $C_4H_9\overset{\oplus}{N}H_3$.

Die genannten Salze werden beispielsweise zur Herstellung von Papierfarbstoffen verwendet.

Die Verbindungen der Formel I eignen sich weiterhin selbst als Farbstoffe für organische Medien, beispielsweise in Flexodruckfarben oder für Zwecke, bei denen es auf eine hohe Löslichkeit im organischen Medium ankommt.

Von besonderer Bedeutung sind die Verbindungen der Formel I mit $Kat^{\oplus}$ gleich :

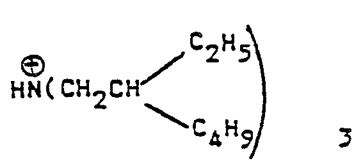

Beispiel 1

180,0 Teile Naphthochinophthalon werden im Verlauf von drei Stunden in 450 Teile 20 %-iges Oleum eingetragen, dann wird bei einer Temperatur von 25 bis 35 °C zwölf Stunden nachgerührt. Die Mischung wird danach vorsichtig mit 14,5 Teilen Wasser versetzt, wodurch die Temperatur auf etwa 60 °C ansteigt, und anschließend in 2000 Teile heißes Wasser eingegossen. Dann läßt man 400 Teile Tri-2-ethylhexylamin zufließen, erhitzt auf 95 bis 100 °C und rührt kräftig. Nach dem Abstellen des Rührers entsteht eine obere flüssige Phase, die hauptsächlich aus Naphthochinophthalonmonosulfonsäure, dem Amin und Schwefelsäure im Verhältnis 1 : 2 : 1 gebildet wird. Die untere Phase aus verdünnter Schwefelsäure wird abgetrennt und verworfen. Das flüssige Farbstoffsalz wird nun nacheinander zweimal mit 2000 und einmals mit 1000 Teilen Wasser intensiv bei 95 bis 100 °C verrührt. Im Gegensatz zur ersten Phasentrennung formt nun das flüssige, lipophile Farbsalz nach dem Abstellen des Rührers die untere Schicht. Darüber sammelt sich das heiße Waschwasser, das infolge teilweiser Hydrolyse des ursprünglichen Doppelsalzes die Schwefelsäure aus dem Farbstoff schrittweise auswäscht und gleichzeitig einen Anteil des Tri-2-ethylhexylamins freisetzt, das sich als dritte flüssige Phase zuoberst absondert. Die pH-Werte der Waschwässer erhöhen sich dabei von 0,4 über 1,1 auf etwa 1,5, während der Sulfatgehalt der Farbstoffphase von ursprünglich ca 9 % auf etwa 0,1 % zurückgeht. Die drei Waschwässer und das freigesetzte überschüssige Amin werden von der Farbstoffphase getrennt. Es verbleiben 462 Teile flüssiges Farbsalz mit einem Reingehalt von etwa 91 %.

Beispiel 2

Verfährt man wie in Beispiel 1, verwendet jedoch anstelle des Tri-2-ethylhexylamins 331 Teile N-Isobutyldi(2-ethylhexyl)amin, so erhält man 459 Teile Farbsalz mit einem Reingehalt von etwa 85 %.

**Patentansprüche**

1. Verbindungen der Formel

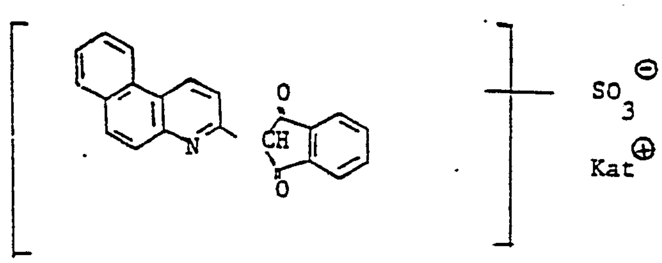

in der die aromatischen Ringe noch durch Chlor, Brom, Methyl, Methoxy oder Nitro substituiert sein können und in der Kat$^{\oplus}$ ein Rest der Formel

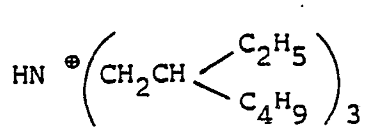

oder

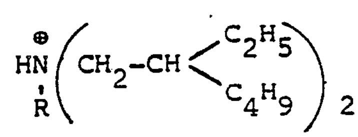

ist, wobei R $C_1$- bis $C_4$-Alkyl bedeutet.

2. Verbindungen gemäß Anspruch 1, dadurch gekennzeichnet, daß das Anion nicht weiter substituiert ist.

3. Verbindungen gemäß Anspruch 1, dadurch gekennzeichnet, daß das Kation Kat$^{\oplus}$ die Formel

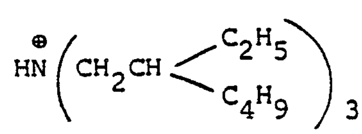

hat.

4. Verwendung der Verbindungen gemäß Anspruch 1 zur Herstellung elektrolytarmer Pulver- und Flüssigeinstellungen oder zum Färben organischer Medien.

## Claims

1. A compound of the formula

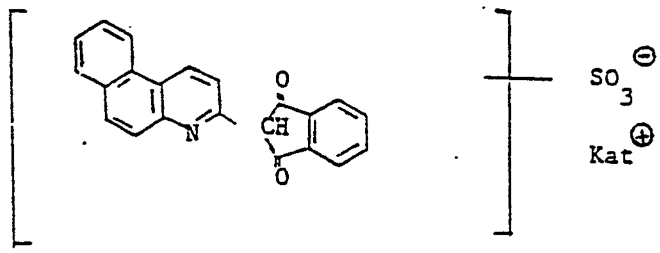

where the aromatic rings can be further substituted by chlorine, bromine, methyl, methoxy or nitro and where $Cat^{+}$ is a radical of the formula

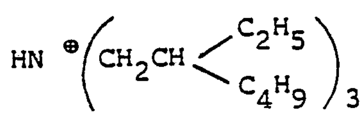

or

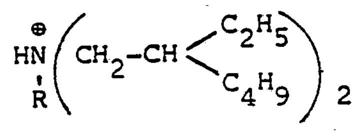

where R is $C_1$-$C_4$-alkyl.

2. A compound as claimed in claim 1, wherein the anion is not further substituted.

3. A compound as claimed in claim 1, wherein the cation $Cat^{+}$ is of the formula

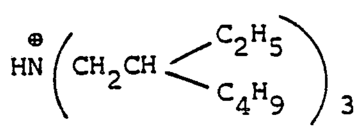

4. Use of a compound as claimed in claim 1 for the preparation of low-electrolyte powder and liquid formulations or for coloring organic media.

## Revendications

1. Composés de formule

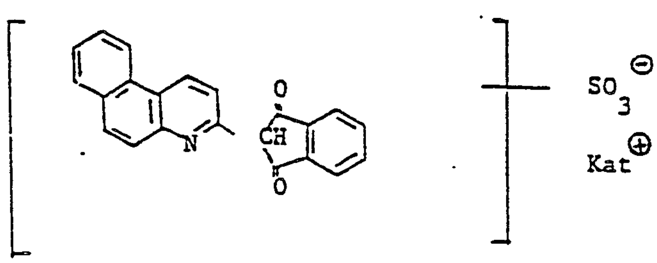

dans laquelle les noyaux aromatiques peuvent aussi être substitués par des atomes de chlore ou de brome ou des groupements méthyle, méthoxy ou nitro et dans laquelle $Kat^{\oplus}$ est un reste de formule

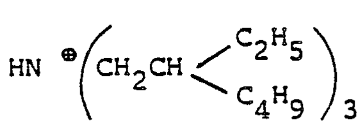

ou

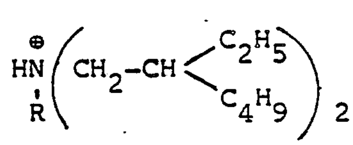

où R représente un reste alkyle en $C_1$-$C_4$.

2. Composés selon la revendication 1, caractérisés en ce que l'anion n'est pas davantage substitué.

3. Composés selon la revendication 1, caractérisé en ce que le cation $Kat^{\oplus}$ a la formule

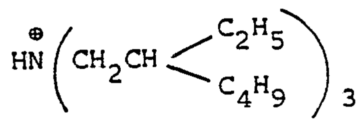

4. Utilisation de composés selon la revendication 1, pour la préparation de produits pulvérulents ou liquides pauvres en électrolytes ou pour la coloration de milieux organiques.